# EUROPÄISCHE PATENTANMELDUNG

(11) **EP 2 680 411 A2**
(43) Veröffentlichungstag der Anmeldung: **01.01.2014**
(21) Anmeldenummer: 13165726.4
(22) Anmeldetag: 29.04.2013
(51) Int. Cl.: H02K 11/02

(54) **Vorrichtung zur Aufnahme eines elektrischen Verbrauchers**

(30) Priorität: 28.06.2012 DE 102012211079
(71) Anmelder: ROBERT BOSCH GMBH, 70442 Stuttgart (DE)
(72) Erfinder: Jawale, Suhas, 76135 Karlsruhe (DE); Gorges, Marcel, 76137 Karlsruhe (DE)

(57) **Zusammenfassung**

Die Erfindung betrifft eine Vorrichtung zur Aufnahme eines elektrischen Verbrauchers (6) umfassend:
- ein geerdetes Gehäuse (3) zur Aufnahme des elektrischen Verbrauchers (6),
- eine im geerdeten Gehäuse (3) aufgenommene elektrische Leitung zur Verbindung des elektrischen Verbrauchers (6) mit einer elektrischen Energiequelle, und
- eine zu einer Wand des geerdeten Gehäuses (3) ausgerichtete Kondensatorplatte (32), die mit der elektrischen Leitung elektrisch verbunden ist.

## Beschreibung

### Technisches Gebiet

Die vorliegende Erfindung betrifft Filterschaltungen, insbesondere Filterschaltungen zum Filtern von Ableitströmen aus einem elektrischen Verbraucher. Ferner betrifft die Erfindung Vorrichtungen zur Aufnahme elektrischer Verbraucher.

### Stand der Technik

Zur Steigerung der elektromagnetischen Verträglichkeit von elektrischen Geräten müssen unerwünschte Transiente unterdrückt werden. In entsprechenden Filterschaltungen dämpfen Entstördrosseln die Transiente und Entstörkondensatoren schließen diese kurz.

Da derartige Entstördrosseln und Entstörkondensatoren teils sehr hohe Leistungen führen müssen, brauchen sie nicht nur eine entsprechende bauliche Größe und nehmen Platz ein, sie sind in der Regel auch sehr teuer.

### Offenbarung der Erfindung

Erfindungsgemäß ist eine Vorrichtung zur Aufnahme eines elektrischen Verbrauchers gemäß Anspruch 1 sowie ein Elektromotor gemäß dem nebengeordneten Anspruch vorgesehen.

Bevorzugte Ausgestaltungen sind in den abhängigen Ansprüchen angegeben.

Gemäß einem ersten Aspekt der Erfindung umfasst eine Vorrichtung zur Aufnahme eines elektrischen Verbrauchers:
- ein geerdetes Gehäuse zur Aufnahme des elektrischen Verbrauchers,
- eine im geerdeten Gehäuse aufgenommene elektrische Leitung zur Verbindung des elektrischen Verbrauchers mit einer elektrischen Energiequelle, und
- eine zu einer Wand des geerdeten Gehäuses ausgerichtete Kondensatorplatte, die mit der elektrischen Leitung elektrisch verbunden ist.

Der angegebenen Vorrichtung liegt die Überlegung zugrunde, dass die eingangs genannten Transienten mit einem zwischen dem geerdeten Gehäuse und dem elektrischen Verbraucher verschalteten Kondensator unterdrück werden könnten, der beispielsweise als Folien- oder Keramikkondensator ausgeführt sein könnte. Die Erfindung erkennt jedoch, dass das geerdete Gehäuse selbst bereits eine Kondensatorplatte und das Medium im Inneren des Gehäuses, beispielsweise Luft, bereits ein Dielektrikum bereitstellt. Statt eines vollständigen Kondensators ist es daher lediglich notwendig, eine Kondensatorplatte in die Leitung der angegebenen einzubringen, die dann gemeinsam mit dem Medium im Gehäuse und dem Gehäuse selbst einen Kondensator zum Ableiten der eingangs genannten Transienten bilden. Auf diese Weise kann die Vorrichtung kompakter, platzsparender und kostengünstiger aufgebaut werden.

In einer Weiterbildung der angegebenen Vorrichtung die ist elektrische Leitung eine elektrische Zuleitung zum Leiten eines elektrischen Stromes von der elektrischen Energiequelle zum elektrischen Verbraucher, wobei die Vorrichtung ferner eine elektrische Ableitung zum Ableiten des elektrischen Stromes vom elektrischen Verbraucher zurück zur elektrischen Energiequelle umfasst, die mit einer weiteren Kondensatorplatte elektrisch verbunden ist.

Durch die auf diese Weise in der Zuleitung und der Ableitung verschalteten Kondensatoren, die den elektrischen Verbraucher für hochfrequente Transiente erden, können Gleichtaktstörungen unterdrückt werden.

Die Kondensatorplatte und die weitere Kondensatorplatte sind dabei besonders bevorzugt gleichförmig ausgebildet, da ein ungleicher Anteil einer der beiden resultierenden Kondensatoren zum Ableiten der hochfrequenten Transiente wirkungslos wäre.

In einer anderen Weiterbildung umfasst die angegebene Vorrichtung einen parallel zwischen die Zuleitung und die Ableitung geschalteten Kondensator, der Gegentaktstörungen zwischen den beiden Zuleitungen filtern kann. Gemeinsam mit den beiden oben genannten Kondensatoren ist damit eine Vollentstörung für den elektrischen Verbraucher möglich, ohne dass als eigene Bauelemente ausgebildete Kondensatoren für die Filterung von Gleichtaktstörungen in der Vorrichtung verbaut werden müssten.

In einer bevorzugten Weiterbildung ist die Kondensatorplatte in die elektrische Leitung in Reihe geschaltet, was den elektrischen Widerstand für die über das Gehäuse abzuleitenden hochfrequenten Transiente spürbar senkt.

In einer besonders bevorzugten Weiterbildung ist eine Drossel in die elektrische Leitung in Reihe geschaltet. Der in der angegebenen Vorrichtung gebildete Kondensator erlaubt es, eine Resonanzfrequenz für Störpegel in höhere Frequenzbereiche zu verschieben. Alternativ kann die Drosselinduktivität gesenkt werden, sollte die Filterwirkung nicht erhöht werden müssen. In diesem Fall kann Bauraum im Gehäuse gespart werden.

Gemäß einem weiteren Aspekt der Erfindung umfasst ein elektrisches Gerät eine angegebene Vorrichtung nach einem der vorstehenden Ansprüche und den Verbraucher.

In einer Weiterbildung des angegebenen elektrischen Geräts ist der Verbraucher ein Elektromotor.

In einer besonderen Weiterbildung des angegebenen elektrischen Geräts ist der Elektromotor mit der elektrischen Leitung verbundene Bürsten umfasst, die zur elektrischen Energieversorgung eines Rotors vorgesehen sind.

In einem derartigen Elektromotor lässt sich die angegebene Vorrichtung besonders günstig nutzen, da durch die kommutierte Übertragung elektrischer Energie auf den Rotor über Bürsten in der Regel hohe Schalttransiente entstehen, die nun mit einer weniger platzintensiven Filterschaltung gedämpft werden können, so dass im Gehäuse mehr Platz für den Rotor oder einen Bürstenträger des Elektromotors zur Verfügung steht.

### Kurzbeschreibung der Zeichnungen

Bevorzugte Ausführungsformen der vorliegenden Erfindung werden nachfolgend anhand der beigefügten Zeichnungen näher erläutert. Es zeigen:
Figur 1 ein Blockschaltbild einer Filterschaltung;
Figur 2 eine schematische Zeichnung eines Elektromotors; und
Figur 3 ein Diagramm mit Messergebnissen zu der Filterschaltung und dem Elektromotor aus den Figuren 1 und 2.

### Beschreibung von Ausführungsformen

In den Figuren werden gleiche technische Elemente mit gleichen Bezugszeichen versehen und nur einmal beschrieben.

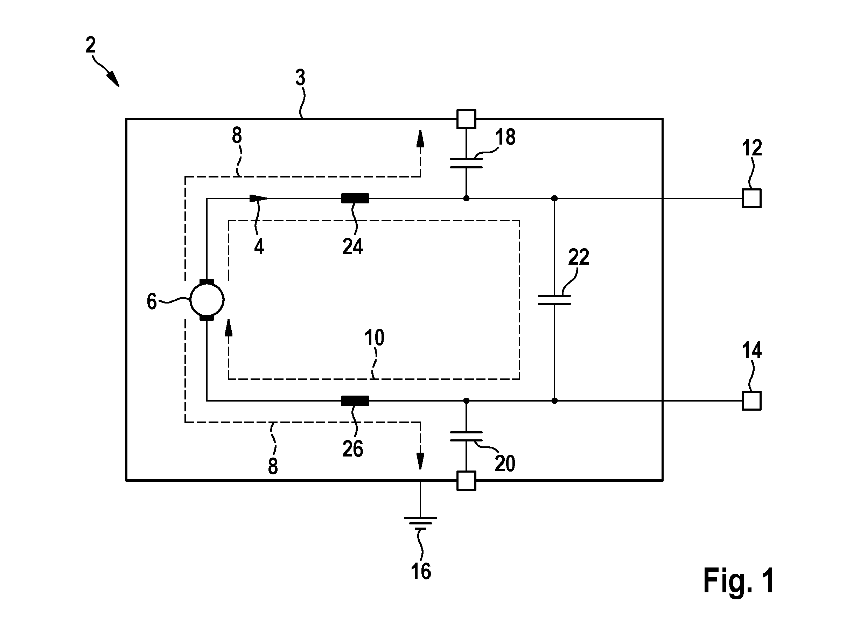

Es wird auf Figur 1 Bezug genommen. Darin ist eine Filterschaltung 2 zum Filtern von störenden Transienten 4 von oder zu einem als Gleichstrommotor 6 ausgebildeten Elektromotor gezeigt, die in einem geerdeten Gehäuse 3 aufgenommen ist. Nachstehend sollen das vorliegende Ausführungsbeispiel anhand von vom Gleichstrommotor 6 abgegebenen störenden Transienten 4 erklärt werden.

Wird der Motor 6 aus einem symmetrischen Energieversorgungsnetz gespeist, ist es schaltungstechnisch vorteilhaft, die störenden Transiente 4 in Gleichtaktstörungen 8 und Gegentaktstörungen 10 linear zu zerlegen. Da die Gleichtaktstörungen 8 und Gegentaktstörungen 10 linear unabhängig voneinander sind, lassen sich für sich alle erdenklichen störenden Transiente 4 mit zwei unterschiedlichen Schaltungen - eine für die Gleichtaktströme 8 und eine für die Gegentaktströme 10 - filtern.

Gleichtaktstörungen 8 sind störende Transiente 4 aus dem Gleichstrommotor 6, die mit gleicher Phase an den beiden Polen 12, 14 des Eingangs der Filterschaltung 2 anliegen. Da Gleichtaktstörungen 8 von der Erdung 16 aus gesehen immer das gleiche Potential aufweisen, können sie nur über die Erdung 16 abfließen, die in der vorliegenden Ausführung am Gehäuse 3 vorgesehen ist. Im Gegensatz dazu sind Gegentaktstörungen 10 Transiente aus dem Motor 4, die gegenphasig an den beiden Polen 12, 14 des Eingangs der Filterschaltung 2 anliegen. Sie erzeugen daher von der Erdung 16 aus gesehen zwischen den Polen 12, 14 eine Potentialdifferenz und damit eine Spannung, weshalb Gegentaktstörungen über die beiden Pole 12, 14 abfließen.

Zur Filterung von Gleichtaktstörungen 8 weißt die Filterschaltung 2 eine erste Gleichtaktkapazität 18 und eine dazu symmetrische zweite Gleichtaktkapazität 20 auf. Jede der Kapazitäten 18, 20 schließt jeweils einen von den Eingangspolen 12, 14 kommenden Zweig der Filterschaltung 2 mit der Erdung 16 für die Gleichtaktstörungen 8 kurz. Unter symmetrisch soll nachstehend verstanden werden, dass beide Gleichtaktkapazitäten 18, 20 im Wesentlichen einen gleichen Leitungsabstand vom geerdeten Gehäuse 3 aufweisen. Symmetrisch soll ferner heißen, dass die Werte beider Gleichtaktkapazitäten 18, 20 gleich groß sind.

Zur Filterung von Gegentaktstörungen 10 weist die Filterschaltung 2 eine Gegentaktkapazität 22 auf, die die Gegentaktstörungen zwischen den von den Eingangspolen 12, 14 kommenden Zweigen der Filterschaltung 2 kurz schließt.

Durch die drei Kapazitäten 18, 20, 22 ist sichergestellt, dass an den Eingangspolen 12, 14 der Filterschaltung 2 keine vom Gleichstrommotor 6 störenden Transiente 4 ankommen.

Zur weiteren Verbesserung der Filterschaltung 2 sind in den von den Eingangspolen 12, 14 kommenden Zweigen der Filterschaltung 2 eine erste Drossel 24 und eine dazu symmetrische zweite Drossel 26 vorgesehen, die die störenden Transiente 4 dämpfen.

Die Kapazitäten 18, 20, 22 und die Drosseln 24, 26 können in der Filterschaltung 2 verdrahtet sein.

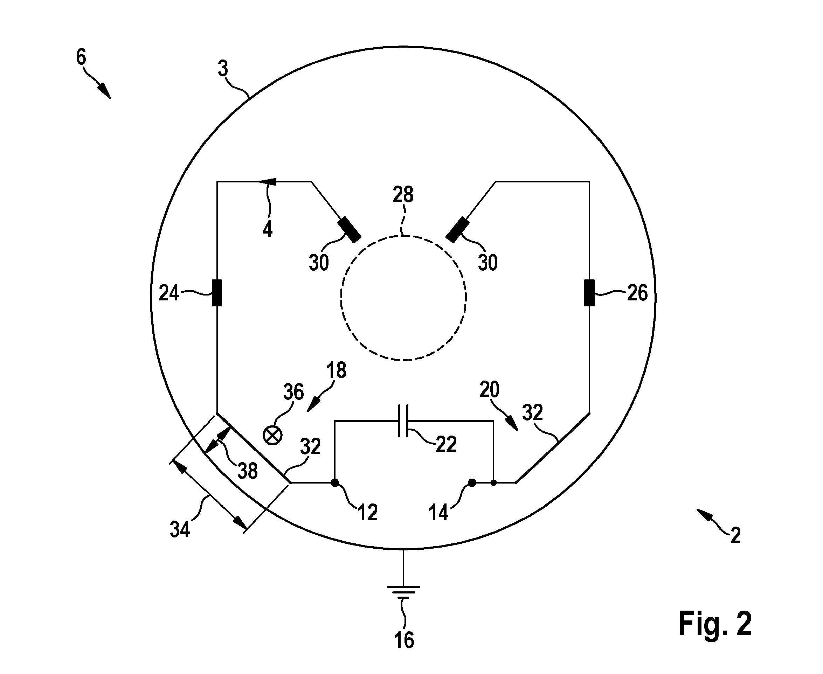

Zwar können die beiden Gleichtaktkapazitäten 18, 20 in jeder beliebigen Form, also beispielsweise als Keramikkondensator oder als Folienkondensator ausgebildet sein, in der vorliegenden Ausführung soll eine der beiden Kondensatorplatten der Gleichtaktkapazitäten 18, 20 jeweils durch das Gehäuse 3 realisiert werden. Dies soll nachstehend anhand Fig. 2 näher beschrieben, die eine schematische Zeichnung des Gleichstrommotors 6 zeigt.

Der Gleichstrommotor 6 ist in der vorliegenden Ausführung als bürstenkommutierter Gleichstrommotor ausgeführt, der einen Rotor 28 über Bürsten 30 mit elektrischer Energie versorgt, so dass der Rotor 28 in einer dem Fachmann bekannten Weise ein magnetisches Querfeld zu seinem Antrieb ausbauen kann. Auf weitere Details zum technischen Aufbau und der Funktion eines bürstenkommutierten Gleichstrommotors soll nachstehend der Kürze halber verzichtet werden.

Die Bürsten 30 werden in der vorliegenden über die Filterschaltung 2 aus dem Eingangspolen 12, 14 mit einem elektrischen Strom gespeist. In einer dem Fachmann bekannten Weise führt dieser elektrische Strom zu einer Drehung des Rotors 28. Bei der Kommutierung des elektrischen Stromes von der Filterschaltung 2 über die Bürsten 30 in den Rotor 28 entstehen in einer dem Fachmann bekannten Weise als transiente Störungen 4 sogenannte Kommutierungsstromspitzen, die durch die Filterschaltung 2 aus Gründen der elektromagnetischen Verträglichkeit gefiltert werden müssen.

Wie bereits erwähnt soll in der vorliegenden Ausführung eine der Kondensatorplatten der Gleichtaktkapazitäten 18, 20 durch das geerdete Gehäuse 16 bereitgestellt werden. Durch die entsprechend andere Kondensatorplatte 32 der Gleichtaktkapazitäten 18, 20 wird in der vorliegenden Ausführung eine Leitung der Filterschaltung 2 derart geführt, dass die Kondensatorplatte 32 entsprechend in Reihe zwischen einer Bürste 30 des Elektromotors 6 und dem entsprechenden Eingangspol 12, 14 der Filterschaltung geschaltet ist.

Die Kondensatorplatte 32 kann am Gehäuse 3 befestigt werden, wenn die Leitungen der Filterschaltung 2 allein nicht ausreichen, um ihr eine ausreichende Lagestabilität zu verleihen. Zur Befestigung kann die Kondensatorplatte 32 auf dem Gehäuse 3 beispielsweise verklebt, verschraubt oder vernietet werden, wobei darauf zu achten ist, dass die Kondensatorplatte 32 elektrisch vom Gehäuse 3 getrennt bleibt. Zwischen der Kondensatorplatte 32 und dem Gehäuse 3 kann jedes beliebige Dielektrikum zur elektrischen Trennung der Kondensatorplatte 32 angeordnet werden. So kann die ohnehin vorhandene Umgebungsluft oder ein geeignetes anderes dielektrisches Material wie Kunststoff oder nichtleitende Keramik als Dielektrikum gewählt werden.

Mit dem zuvor beschriebenen Aufbau der Gleichtaktkapazitäten 18, 20 lassen sich Werte zwischen 5pF und 10pF erreichen. Die Kondensatorplatte 32 soll in der vorliegenden Ausführung eine Breite 34 und eine Länge 36 von jeweils 13 mm aufweisen. Für den Abstand 38 der Kondensatorplatte 32 vom Gehäuse 3 wurde in der vorliegenden Ausführung 0,25 mm gewählt. Damit ergeben sich als Werte für die Gleichtaktkapazitäten 18, 20 jeweils 6,3pF.

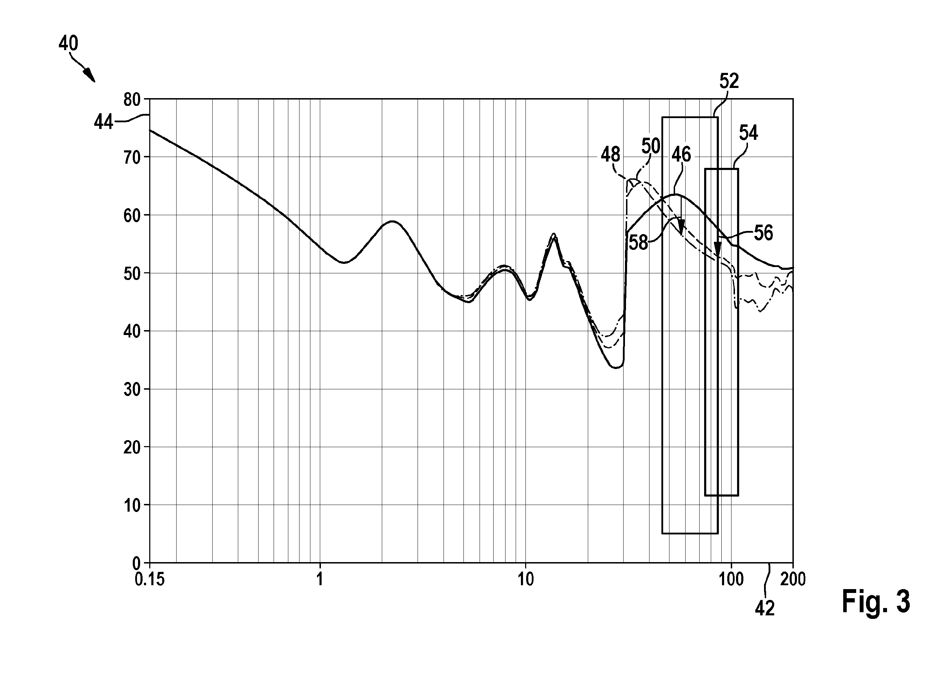

In Fig. 3 ist ein Diagramm 40 mit Simulationsergebnissen zu der Filterschaltung 2 und dem Elektromotor 6 aus den Fig. 1 und 2 gezeigt. In dem Diagramm 40 sind über in MHz angegebene Frequenzen 42 Störspannungswerte 44 in dBµV angegeben. Die Störspannungswerte 44 stellen dabei die oben beschriebenen gemessenen transienten Störungen 4 dar.

Eine erste Kurve 46 der im Diagramm 40 dargestellten Kurven stellt den Verlauf der Störspannungswerte 44 dar, wenn in der Filterschaltung 2 lediglich Drosseln 24, 26 und keine extra Gleichtaktkapazitäten 18, 20 verschaltet werden. Demgegenüber stellt eine zweite Kurve 48 den Verlauf der Störspannungswerte 44 dar, wenn in der Filterschaltung 2 Gleichtaktkapazitäten 18, 20 mit den oben beschriebenen Wert von 6,3pF verschaltet werden. Eine dritte Kurve 50 stellt den Verlauf der Störspannungswerte 44 dar, wenn in der Filterschaltung 2 Gleichtaktkapazitäten 18, 20 mit einem Wert von 10pF verschaltet werden.

Aus Fig. 3 ist ersichtlich, dass die Gleichtaktkapazitäten bis zu einem Frequenzwert von 20 MHz so gut wie keinen Einfluss auf die transienten Störungen haben. Oberhalb dieser Grenze sind zwei, für die elektromagnetische Verträglichkeit entscheidende Frequenzbänder 52, 54 in Fig. 3 angedeutet. Das erste Frequenzband 52 zwischen ca. 47MHz und 87MHz wird nachstehend TV1-Band 52 genannt, während das zweite Frequenzband 54 zwischen ca. 72MHz und 101MHz nachstehend UKW-Band 54 genannt wird.

Wie aus Fig. 3 ersichtlich führt die Einführung der in Fig. 2 gezeigten Gleichtaktkapazitäten in den oben genannten Frequenzbändern 52, 54 mit einem Wert von 6,3pF zu einer Reduktion 56 der Störspannungswerte 44 von bis zu 10dB und mit einem Wert von 10pF zu einer Reduktion 58 der Störspannungswerte 44 von bis zu 16dB.

Um diese Reduktion der Störspannungswerte 44 ausschließlich über die Drosseln 24, 26 zu erreichen, wäre eine Erhöhung der Induktivität der Drosseln 24, 26 von bis zu 200% notwendig.

## Patentansprüche

1. Vorrichtung zur Aufnahme eines elektrischen Verbrauchers (6) umfassend:
- ein geerdetes Gehäuse (3) zur Aufnahme des elektrischen Verbrauchers (6),
- eine im geerdeten Gehäuse (3) aufgenommene elektrische Leitung zur Verbindung des elektrischen Verbrauchers (6) mit einer elektrischen Energiequelle, und
- eine zu einer Wand des geerdeten Gehäuses (3) ausgerichtete Kondensatorplatte (32), die mit der elektrischen Leitung elektrisch verbunden ist.

2. Vorrichtung nach Anspruch 1, wobei die elektrische Leitung eine elektrische Zuleitung zu Leiten eines elektrischen Stromes von der elektrischen Energiequelle zum elektrischen Verbraucher (6) ist, und die Vorrichtung ferner eine elektrische Ableitung zum Ableiten des elektrischen Stromes vom elektrischen Verbraucher (6) zurück zur elektrischen Energiequelle umfasst, die mit einer weiteren Kondensatorplatte (32) elektrisch verbunden ist.

3. Vorrichtung nach Anspruch 2, wobei die Kondensatorplatte (32) und die weitere Kondensatorplatte (32) gleichförmig ausgebildet sind.

4. Vorrichtung nach einem der vorstehenden Ansprüche, umfassend einen parallel zwischen die Zuleitung und die Ableitung geschalteten Kondensator (22).

5. Vorrichtung nach einem der vorstehenden Ansprüche, wobei die Kondensatorplatte (32) in die elektrische Leitung in Reihe geschaltet ist.

6. Vorrichtung nach einem der vorstehenden Ansprüche, umfassend eine Drossel (24, 26), die in die elektrische Leitung in Reihe geschaltet ist.

7. Elektrisches Gerät, umfassend:
- eine Vorrichtung nach einem der vorstehenden Ansprüche, und
- den elektrischen Verbraucher (6).

8. Elektrisches Gerät nach Anspruch 7, wobei der Verbraucher (6) ein Elektromotor ist.

9. Elektrisches Gerät nach Anspruch 8, wobei der Elektromotor mit der elektrischen Leitung verbundene Bürsten (30) umfasst, die zur elektrischen Energieversorgung eines Rotors (28) vorgesehen sind.
